# FASCICULE DE BREVET EUROPEEN

(11) **EP 0 833 802 B1**
(45) Date de publication et mention de la délivrance du brevet: **01.10.2008**
(21) Numéro de dépôt: 97920780.0
(22) Date de dépôt: 17.04.1997
(51) Int. Cl.: C04B 24/38, C09K 8/487, E21B 43/25

(54) **PROCEDE ET LAITIER DE CIMENT UTILISANT DES GALACTOMANNANES MODIFIES HYDROPHOBIQUEMENT COMME REDUCTEUR DE FILTRAT**
VERFAHREN UND SCHLACKENZEMENT, WELCHE HYDROPHOBISCH MODIFIZIERTE GALAKTOMANNANE ZUR FILTRATREDUZIERUNG VERWENDEN
SLAG CEMENT AND PROCESS USING HYDROPHOBICALLY MODIFIED GALACTOMANNANS AS FILTRATE REDUCTANTS

(30) Priorité: 18.04.1996 FR 9604990
(43) Date de publication de la demande: 08.04.1998
(73) Titulaire: Institut Français du Pétrole, 92852 Rueil-Malmaison Cedex (FR); LAMBERTI S.p.A., 21041 Albizzate (Varese) (IT)
(72) Inventeur: AUDIBERT, Annie, F-78290 Croissy-sur-Seine (FR); ARGILLIER, Jean-François, F-92150 Suresnes (FR); PFEIFFER, Ugo, I-20149 Milan (IT); MOLTENI, Guiseppe, I-21100 Varese (IT)
(86) Numéro de dépôt international: PCT/FR1997/000697
(87) Numéro de publication internationale: WO 1997/038951

(56) Documents cités:
- EP-A- 0 281 360
- EP-A- 0 290 198
- EP-A- 0 722 036
- US-A- 3 740 360
- US-A- 4 960 876
- US-A- 4 997 487
- US-A- 5 233 032

## Description

La présente invention concerne notamment des opérations menées dans le but d'exploiter des gisements souterrains contenant des hydrocarbures. Plus particulièrement, l'invention décrit un procédé pour contrôler les pertes de fluides par filtration dans une formation géologique lors de la mise en place d'un laitier de ciment dans un puits.

Quand un laitier de ciment est placé au contact d'une formation géologique poreuse, il se produit généralement un phénomène d'intrusion d'une partie aqueuse du laitier dans les pores de la formation. Ce phénomène est généralement appelé filtration. Cette quantité perdue dans la composition du laitier, est appelée perte par filtration ou filtrat. Il est souhaitable de limiter la perte, notamment en eau d'un laitier car cette perte peut altérer ses propriétés physico-chimiques, par exemple rhéologiques. Le laitier peut voir sa caractéristique de pompabilité évoluée très fortement, et/ou ses caractéristiques de prise. Une prise trop rapide du ciment ou une altération de la prise due à une diminution du taux d'eau nécessaire aux différentes réactions chimiques permettant la prise du ciment sont à l'évidence préjudiciables à l'opération de mise en place dans le puits ainsi qu'aux propriétés mécaniques du ciment après la prise. Cette filtration au travers d'une formation poreuse peut également entraîner des risques de déstabilisation des parois du puits ou de colmatage des zones géologiques productrices ou potentiellement productrices. Des additifs spécifiques aux laitiers de ciment, agissant comme réducteurs de filtrat sont alors ajoutés au laitier pour permettre de limiter la filtration, par exemple en réduisant la vitesse de filtration, notamment en diminuant la perméabilité du cake formé sur les parois du puits.

Il est clair que ces produits réducteurs de filtrat pour laitier de ciment sont spécifiques à la formulation du laitier dans la mesure où la teneur en solide est importante et en ce que le laitier a par définition une évolution physico-chimique au droit de la formation au cours de la solidification. De plus, il est souhaitable que le cake formé à cause de la filtration ne nuise pratiquement pas à la liaison mécanique du ciment avec la paroi du puits.
On connaît dans la profession de nombreux produits réducteurs de filtrat pour les laitiers de cimentation. On peut citer par exemple, l'utilisation de particules minérales finement divisées ou de polymères hydrosolubles tels que les dérivés sulfonés du polyacrylamide ou la HEC (hydroxyéthylcellulose). Toutefois, les polymères utilisés dans la profession sont très sensibles aux hautes températures que l'on peut rencontrer en sous-sol, perdant ainsi leurs propriétés initiales.

Ainsi, la présente invention concerne un procédé mis en oeuvre dans un puits foré à travers au moins une formation géologique ayant une certaine perméabilité, dans lequel on effectue le déplacement d'un laitier de ciment dans ledit puits. Dans le procédé, on limite la filtration au travers des parois dudit puits lors de la mise en place du laitier de ciment par l'adjonction d'une quantité déterminée d'au moins un dérivé de galactomannane modifié hydrophiliquement et hydrophobiquement.
Dans une variante, le dérivé est de la guar hydroxy propylée modifiée hydrophobiquement (HMHPG).
Le galactomanane modifié hydrophyliquement peut être modifié hydrophobiquement par la fixation, sur les oxygènes, de radicaux de formule générale (1): 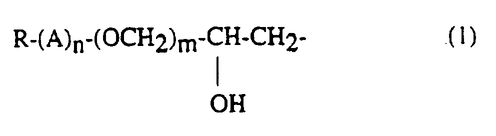 où
A= groupe oxyalkylénique O-CₚH₂ₚ linéaire ou ramifié avec p de 2 à 4,
n=0 à 30; m=0 ou 1, avec m ne pouvant être nul qu'avec n nul,
R= radical alkyle (hydrophobique) linéaire ou ramifié, saturé ou avec insaturation éthylènique comprenant entre 10 et 32 atomes de carbone, préférentiellement entre 12 et 30, plus particulièrement entre 18 et 28.

La masse moléculaire du galactomannane modifié peut être inférieure à 2000000 daltons et préférentiellement comprise entre 50000 et 1600000 daltons.

Le laitier peut comporter d'autres polymères de type polysaccharide ou polymère synthétique choisi dans le groupe constitué par le scléroglucane, les dérivés de type cellulose hydroxy éthylée (HEC), la CMC, la gomme de Guar et les dérivés de polyacrylamide.

L'invention concerne également un laitier de ciment destiné à être mis en place dans un puits foré à travers au moins une formation géologique ayant une certaine perméabilité, le laitier comporte une quantité déterminée d'au moins un dérivé de galactomannane modifié hydrophiliquement et hydrophobiquement.

Le filtrat de ce laitier peut être contrôlé par l'adjonction d'une quantité déterminée d'au moins un dérivé de galactomannane modifié hydrophiliquement et hydrophobiquement.

Dans une variante, le dérivé peut être de la guar hydroxy propylée modifiée hydrophobiquement (HMHPG).

La viscosité du laitier peut être principalement contrôlée par l'adjonction d'au moins un polymère choisi dans le groupe constitué par le xanthane, le sciéroglùcane, le wellane, la cellulose hydroxy éthylée (HEC), la CMC, la gomme de Guar et les polyacrylamides ou leurs dérivés.

L'invention concerne également un additif réducteur de filtrat pour laitier de ciment, l'additif comporte une quantité déterminée d'au moins un dérivé de galactomannane modifié hydrophiliquement et hydrophobiquement.

Les galactomannanes sont des polysaccharides composés principalement d'unités galactose et mannose. Ils sont obtenus à partir de l'endosperme de graines légumineuses, telles que la guar, le caroube, et similaire.

En particulier, la gomme guar est un polymère naturel constitué d'unités monomères de D-mannose reliées entre elles par des liaisons 1-4 pour former la chaîne principale sur laquelle sont branchées des unités de D-Galactose par des liaisons 1-6. Ce dérivé est fonctionnalisé, de façon à le rendre hydrophile, par réaction d'un oxyde d'alkylène de 2 à 4 atomes de carbone ou par réaction en présence d'acide monochloroacétique. Les substituants hydrophiles sont choisis parmi le groupe constitué par l'hydroéthyl, l'hydroxypropyl, l'hydroxybutyl, carboxyméthyl. Ce dérivé est également fonctionnalisé, pour le rendre hydrophobe, par réaction d'un époxyalcane et/ou alcène, ou alkyl et/ou alkènyl glycidyl éther en milieu basique, par exemple selon le procédé décrit dans le document US-A-4960876, permettant le greffage de 0,001% à 2% de fonctions (1).

Les produits ainsi obtenus (HM Guar) peuvent être utilisés tels quels ou purifiés par extraction dans des solvants organiques ou dans un mélange eau/solvant organique de façon à éliminer certaines impuretés.

La HM Guar hydrosoluble peut être préparée à partir d'un dérivé de la gomme guar par incorporation chimique d'une longue chaîne correspondante au radical selon la formule (1).

Le greffage de fonctions hydrophobes sur la chaîne hydrophile se fait par le biais de fonctions de type 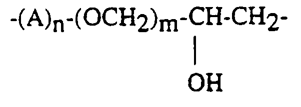 où A = groupe oxyalkylénique O-CₚH₂ₚ linéaire ou ramifié avec p de 2 à 4, n=0 à 30; m=0 ou 1, avec m ne pouvant être nul qu'avec n nul.

Ces fonctions de type "spacer", permettent d'éloigner les groupements hydrophobes de la chaîne principale.

Le taux de motifs hydrophobes est variable de 0,00001 à environ 0,02 substituants par unité anhydroglucosidique, de préférence entre 0,00005 et 0,01 et plus particulièrement efficace entre 0,0001 et 0,001 substituants par unité anhydroglucosidique.

Le polymère HM Guar peut avoir un taux de substitution molaire de motif hydrophile d'au moins 0,7, de préférence entre 0,7 et 4, le rapport molaire entre les substituants hydrophiles et hydrophobes étant compris entre 35/1 et 400000/1. Le motif hydrophile peut être de type hydroxyéthyle, hydroxypropyle, hydroxybutyle ou un substituant carboxylé. Le motif hydrophobe peut être de type alkyle, alkylényle linéaire ou branché comprenant de 10 à 32 atomes de carbone. La guar hydroxy propylée modifiée hydrophobiquement est ici dénommée HMHPG.

Les polymères utilisés dans la présente invention présentent au moins une meilleure efficacité pour contrôler la filtration par rapport notamment aux polymères synthétiques acryliques connus. Mais de plus, les polymères selon l'invention sont des produits naturels qui ont notamment pour avantage d'être biodégradables et compatibles avec les lois relatives à la protection de l'environnement. Par rapport aux autres polymères naturels classiquement utilisés, les polymères selon l'invention ont une bonne capacité pour contrôler la filtration des laitiers de ciment.

La demanderesse a mis en évidence que le polymère HM Guar, défini plus haut, a de bonnes qualités pour contrôler la filtration d'un laitier de ciment, qui est un fluide dont la phase liquide est aqueuse. Le laitier en circulation dans un puits, ou mis en place par circulation dans le puits peut comporter des produits viscosifiants à base d'argiles réactives et/ou de polymères de nature spécifique pour réaliser notamment la fonction de viscosifiant. Pour certaines applications, le laitier pourra comporter d'autres charges minérales, par exemple de la silice, des fumées de silice, de la barite, etc, afin de modifier les caractéristiques rhéologiques et physiques du laitier.

De manière surprenante, le polymère de la présente invention présente une meilleure résistance aux hautes températures que les polymères couramment utilisés pour cette application. Ceci permet d'utiliser le polymère de la présente invention dans des domaines d'application beaucoup plus étendus.

Un laitier est un fluide déplacé dans un puits pour être mis en place dans un puits de production. Au cours de son déplacement ou de sa mise en place ce laitier est en contact pendant une durée plus ou moins longue avec la formation géologique productrice ou potentiellement productrice.

Les caractéristiques physiques et/ou chimiques de ces laitiers sont contrôlées et ajustées en fonction de la nature de la formation géologique et des effluents présents, des conditions de fond et des différents rôles que peuvent réaliser de tels fluides, par exemple d'étanchéité, contrôle des pressions, etc. De plus, ces fluides doivent autant que possible ne pas modifier la productivité de la couche géologique productrice, c'est-à-dire ne pas réduire irréversiblement la perméabilité de la formation productrice. Dans tous les cas, le contrôle de la filtration est un paramètre très important.

La HM Guar utilisée selon une variante de la présente invention révèle de bonne capacité pour contrôler la filtration, en combinaison ou non avec certains polymères viscosifiants et ce d'autant que la température augmente. Ceci n'est généralement pas le cas pour les dérivés de polymères naturels classiquement utilisés comme réducteur de filtrat dans les formulations de laitier.

Les essais suivants vont mettre en évidence les caractéristiques du HM guar dans diverses conditions d'utilisations et selon des procédures de tests conventionnels. Les différents laitiers de ciment et leurs différentes formulations sont décrits dans le volume "Well cementing" Developments in Petroleum Science, 28, ed. E.B. Nelson, Elsevier 1990. Les réducteurs de filtrat classiquement utilisés dans les laitiers de ciment sont par la HEC (hydroxy éthyl cellulose), ou des dérivés sulfonés de l'acrylamide. Ces derniers sont commercialisés sous le nom de marque Halad de la société Halliburton (USA) et décrits dans les brevets US n° 4557763 ou 4703801. Les tests de caractérisation des laitiers ont été exécutés selon les normes API (American Petroleum Institute) en vigueur : API SPEC 10-88, section 5-Préparation du laitier, section 9-Mesure au consistomètre, Appendix F-Filtration. Les filtrats sont donnés en millilitre (ml), les temps de prise en heure.

Différentes formulations de laitiers ont été testées, avec ou sans ajoût de retardateurs. La formulation est en général à base de ciment de type Classe G mélangé à 44% d'eau selon la procédure API. Le polymère utilisé en tant que réducteur de filtrat est hydraté au préalable pendant 16 heures puis additionné au laitier de façon à obtenir une concentration de 0,325 % . Le mélange est homogénéisé au malaxeur pendant 15 s à basse vitesse, puis 35 s à vitesse élevée. Un retardateur est ajouté au laitier à une concentration comprise entre 0,2 et 0,6 % après mesure du temps de prise à différentes températures de façon à adapter ce temps aux essais en température. La mise en température du laitier en vue de la filtration se fait à l'aide du consistomètre Halliburton pendant 20 min.

Les formulations selon l'invention ont été comparées à des formulations classiques contenant des réducteurs de filtrat connus dans la profession, tels la HEC (cellulose hydroxy éthylée) qui peut être actuellement considérée comme un des meilleurs produits disponibles, l'hydroxypropylguar HPG, produit précurseur de la gomme guar hydroxypropyl modifiée hydrophobiquement, les Halad 344 et 100A, dérivés de polyacrylamides commercialisés par la société Halliburton (USA).

Les différents dérivés de gomme guar qui ont été utilisés dans les essais, sont des guar hydroxy propylées modifiées hydrophobiquement HMHPG. Les caractéristiques de viscosité η correspondant à une viscosité Brookfield (mPa.s) mesurée à une concentration en polymère de 2%, à 20 tours/min. La masse moléculaire des produits a été mesurée par diffusion de lumière aux petits angles sur des solutions diluées de polymère. Leur viscosité intrinsèque [η] est calculée à partir des viscosités relatives de solutions diluées à faible concentration en présence de KCl 5 g/l, la constante de Huggins k' étant caractéristique des interactions polymère/polymère:
- **HPG:** gomme hydroxypropyl guar, selon la formule (I) avec R=0, n=0 et m=0;
   η =14000; [η]=1050 cm³/g, k'∼0.8, Mw=2,6 10⁶ daltons.
- **HMHPG 7:** guar modifiée, selon la formule (1) avec R=C₁₈H₃₇, n=0, m=1;
   η =7000: [η]=800 cm³/g, k'∼0,8.
- **HMHPG 8:** guar modifiée selon la formule (1) avec R=C ₁₂H₂₅, n=0, m=1;
   η=7800.
- **HMHPG 9:** guar modifiée selon la formule (1) avec R=C₂₂H₄₅, n=0, m=1;
   •=2000.
- **HMHPG 10:** guar modifiée selon la formule (1) avec R=C₁₈H₃₇, n=0, m=1;
   • =8000,
- **HMHPG:** guar modifiée selon la formule (1) avec R=C₁₈H₃₇, n=0, m=1;
   • =5400; [•]=950 cm³/g, k'∼1,5,

Les différents produits modifiés testés (HMHPG. 7, HMHPG 8, HMHPG 9, HMHPG. 10 et HMHPG) ont des masses moléculaires comprises entre 1,5 et 2 10⁶ daltons.

On peut cier d'autres produits modifiés hydrophiliquement et hydrophobiquement selon l'invention :
- **HMHPG 14:** R = C₁₈H₃₇, n = 10, m = 1, p =2
   •=500,
- **HMHPG 15 :** R = C₁₆H₃₃, n = 0, m = 0,
   •=4300.
- **HMHPG 17 :** R = C₂₂H₄₅ à C₂₈H₅₇, n = 0, m = 1,
   •=4400.
- **HMHPG 18 :** R = C₁₄H₂₉, n=0, m=0,
   •=3200,

Il faut noter que pour les quatre produits ci-dessus, la viscosité a été mesurée à une concentration de 1% en polymère.

### Essai 1 :

### Comparaison de l'efficacité du HMHPG avec des réducteurs de filtrat classiques, pour différentes températures

Conditions : Standard API,
Formulation de base FB : ciment type G, eau distillée 44%.

Les polymères sont dosés à 0,325%

| | **Filtrat (cc) 30 min** | |
|---|---|---|
| Température | **86 F (30°C)** | **140 F (60°C)** |
| Additif à FB | | |
| **HEC** | 32 | 53,5 |
| **HPG** | 30 | 102 |
| **HMHPG** | 20,5 | 41 |
| **HMHPG/HPG (50/50)** | - | 64 |
| **Hal 344** | 19 | 35 |
| **Hal 100 A** | - | 155 |

Les additifs de type Halad (HAL 344, Hal 100 A), et HEC utilisés sont respectivement commercialisés par les sociétés Halliburton et Aqualon.

### Remarques :

Les caractéristiques de filtration en présence de HMHPG sont du même ordre de grandeur que celles de l'Halad ou de la HEC. qui sont actuellement considérées comme les meilleurs produits disponibles.

L'utilisation d'un mélange de produits HPG/ HMHPG permet de diminuer le volume de filtrat 30 min.

### Essai 2 :

### Ajout de retardateur dans la formulation

Conditions : Standard API,
Formulation de base FB : ciment type G, eau distillée 44%.

Les polymère sont dosés à 0,325% et le retardateur HR 15 à 0,5%.

Les additifs retardateurs de prise HR15 et HR6 sont commercialisés par la société Halliburton (USA).

| | **Filtrat (cc) 30 min** | | |
|---|---|---|---|
| Température | **140 F (60°C)** | **200 F (93,4°C)** | **230 F (110°C)** |
| Additif à FB | | | |
| **HEC+HR15** | - | > 150 | - |
| **HMHPG** | 41 | 120 | - |
| HMHPG + HR15 | 15 | 54 | > 50 |
| **Hal 344** | - | 127 | >150 |
| **Hal 344 + HR15** | - | *>*150 | >150 |

L'utilisation de retardateur qui est un dérivé de polyacrylate et donc agit principalement en tant de dispersant permet d'homogénéiser le laitier et ainsi améliore vraisemblablement l'efficacité du produit réducteur de filtrat.

Les temps de prise ont été mesurés pour ces différentes formulations et sont rassemblés dans le tableau ci-dessous:

| | **Temps de prise (h-mn)** | |
|---|---|---|
| Température | **200 F (93,3°C** | **230 F (110°C))** |
| Additif à FB | | |
| **HEC + HR15** | 20h10 | 12h46 |
| **HPG** | >23h30 | - |
| **HMHPG** | 1h49 | - |
| **HMHPG + HR15** | 17h34 | 16h21 |
| **Hal 344** | 1h10 | - |
| **Hal 344 + HR 15** | >17h | 16h46 |

On remarque, au travers de ces dernières mesures, que les temps de prise avec ce type de retardateur sont trop élevés; en particulier, ils dépassent le temps requis d'environ 5 heures. Ceci peut être optimisé par une optimisation de la concentration en retardateur
ou une sélection de ce retardateur. Les résultats suivants ont été ainsi obtenus:

| | **Temps de prise (h-mn)** | | | |
|---|---|---|---|---|
| **Concentration** | **0,25 %** | **0,3 %** | **0,4 %** | **0,5 %** |
| **HMHPG + HR15** | **0h5** | **1 h43** | **12h26** | **20h10** |
| **HMHPG + HR6** | - | - | - | 3h34 |

De même, pour les plus hautes températures, les formulations doivent être optimisées en particulier par l'adjonction d'une charge minérale qui permet aussi de diminuer le volume de filtrat.

### Essai 3 : Influence de la longueur de chaîne hydrophobe

Conditions : Standard API,
Formulation de base FB : ciment type G, eau distillée 44%.
Les polymères sont dosés à 0,325%, le retardateur HR 6 à 0.5% uniquement pour les essais à 230 F (110°C).

| | **Filtrat (cc) 30 min** | |
|---|---|---|
| Température | **140 F (60°C)** | **230 F (110°C)** |
| Additif à FB | | (+ **HR6**) |
| **HMHPG** | 41 | >150 |
| **HMHPG 7** | 70 | 70 |
| **HMHPG 8** | 20 | >100 . |
| **HMHPG 9** | 70 | >150 |
| **HMHPG 10** | >100 | >100 |

Il ressort de ces essais que selon les conditions d'utilisation, notamment en température, une optimisation est possible en choisissant notamment une masse moléculaire, une longueur de chaîne hydrophobe adaptées, ou un "spacer" spécifique.

### Essai 4 :

Conditions : Standard API,
Formulation de base FB : ciment type G, eau distillée 44%
Les polymères sont dosés à 0,325% et le retardateur HR6 à 0,2%.

| | **Filtrat (cc) à 30 mn** | **Temps de prise (h-mn)** |
|---|---|---|
| Température | 60°C | |
| HMHPG | 14 | 3h34 |
| HMHPG 18 | 40 | 5 h 10 |

Les différents essais de la présente description confirment donc que les formulations de laitier peuvent avoir une bonne caractéristique de filtration en utilisant une quantité efficace de HMHPG comme réducteur de filtrat. On peut penser que la structure particulière de la HM Guar de la présente invention est favorable pour former un cake de faible perméabilité. De plus, on a constaté que la stabilité en température de la structure de la HM Guar permet son application dans les domaines d'intérêt de la profession. Les avantages et les fonctions de la HM Guar se retrouvent dans les polymères de cette classe pour des masses moléculaires inférieures à environ 2000000 daltons.

## Revendications

1. Procédé mis en oeuvre dans un puits foré à travers au moins une formation géologique ayant une certaine perméabilité, dans lequel on effectue le déplacement d'un laitier de ciment dans ledit puits, **caractérisé en ce que** l'on limite la filtration au travers des parois dudit puits lors de la mise en place du laitier de ciment par l'adjonction d'une quantité déterminée d'au moins un dérivé de galactomannane modifiée hydrophiliquement et hydrophobiquement, ledit dérivé de galactomannane modifié hydrophiliquement étant substitué, sur les oxygènes, par des radicaux de formule générale (1): 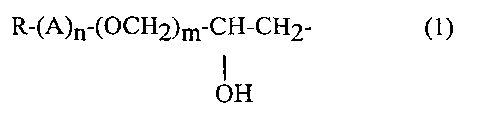 où
A = groupe oxyalkylénique O-CₚH₂ₚ linéaire ou ramifié avec p de 2 à 4,
n = 0 à 30; m = 0 ou 1, avec m pouvant être nul qu'avec n = 0,
R = radical alkyle (hydrophobique) linéaire ou ramifié, saturé ou avec insaturation éthylènique comprenant entre 10 et 32 atomes de carbone, préférentiellement entre 12 et 30 et le radical hydrophobe étant présent avec un degré de substitution de 0,00001 à 0,001 par unité anhydroglucosidique.

2. Procédé selon la revendication 1, dans lequel le radical hydrophobe est présent avec un degré de substitution de 0,0001 à 0,001 par unité anhydroglucosidique.

3. Procédé selon la revendication 1 ou 2, dans lequel ledit dérivé est de la guar hydroxy propylée modifiée hydrophobiquement (HMHPG).

4. Procédé selon l'une des revendications précédentes, dans lequel la masse moléculaire dudit dérivé de galactomannane modifié hydrophobiquement est inférieure à 2000000 daltons et préférentiellement comprise entre 50000 et 1600000 daltons.

5. Procédé selon l'une des revendications précédentes, **caractérisé en ce que** R comporte entre 18 et 28 atomes de carbone.

6. Procédé selon l'une des revendications 1 à 5, dans lequel ledit laitier comporte en outre au moins un polymère choisi dans le groupe constitué par le xanthane, le scléroglucane, le wellane, la cellulose hydroxy éthylée (HEC), la CMC, la gomme de Guar et les polyacrylamides.

7. Laitier de ciment destiné à être mis en place dans un puits foré à travers au moins une formation géologique ayant une certaine perméabilité, **caractérisé en ce qu'**il comporte une quantité déterminée d'au moins un dérivé de galactomannane modifié hydrophiliquement et hydrophobiquement, ledit dérivé de galactomannane modifié hydrophiliquement étant substitué, sur les oxygènes, par des radicaux de formule générale (1): 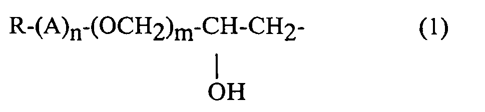 où
A = groupe oxyalkylénique O-CₚH₂p linéaire ou ramifié avec p de 2 à 4,
n = 0 à 30; m = 0 ou 1, avec m pouvant être nul qu'avec n = 0,
R = radical alkyle (hydrophobique) linéaire ou ramifié, saturé ou avec insaturation éthylènique comprenant entre 10 et 32 atomes de carbone, préférentiellement entre 12 et 30 et le radical hydrophobe étant présent avec un degré de substitution de 0,00001 à 0,001 par unité anhydroglucosidique.

8. Laitier de ciment selon la revendication 7 dans lequel le radical hydrophobe est présent avec un degré de substitution de 0,0001 à 0,001 par unité anhydroglucosidique.

9. Laitier selon la revendication 7 ou 8, **caractérisé en ce que** son filtrat est contrôlé par l'adjonction de ladite quantité déterminée de dérivé de galactomannane modifié hydrophiliquement et hydrophobiquement.

10. Laitier selon l'une des revendications 7 à 9, **caractérisé en ce que** ledit dérivé de gomme guar est de la guar hydroxy propylée modifiée hydrophobiquement (HMHPG).

11. Laitier selon l'une des revendications 7 à 10, **caractérisé en ce que** sa viscosité est principalement contrôlée par l'adjonction d'au moins un polymère choisi dans le groupe constitué par le xanthane, le scléroglucane, le wellane, la cellulose hydroxy éthylée (HEC), la CMC, la gomme de Guar et les polyacrylamides.

## Claims

1. A method applied in a well bored through at least one geological formation of a certain permeability in which a clinker cement is circulated in a well, **characterised in that** filtration through the walls of said well is limited when applying a clinker cement by adding a given quantity of at least one derivative of hydrophilically and hydrophobically modified galactomannan, said derivative of hydrophilically modified galactomannan being substituted, on the oxygens, with radicals of the general formula (1): 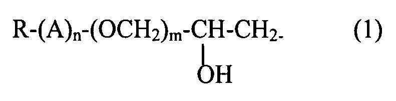 where
A = a linear or branched oxyalkylenic O-CₚH₂ₚ group where p is 2 to 4,
n = 0 to 30 ; m = 0 or 1 where m may not be zero unless n is zero,
R = a linear or branched (hydrophobic) alkyl radical, which may or may not be ethylenically saturated having between 10 and 32 carbon atoms, preferably between 12 and 30
and the number of hydrophobic units varying from 0,00001 to approximately 0,001 substituents per unit of anhydroglucoside.

2. A method as claimed in claim 1, in which the number of hydrophobic units varying from 0,0001 to approximately 0,001 substituents per unit of anhydroglucoside.

3. A method as claimed in claim 1 or 2, in which said derivative is hydrophobically modified hydroxy propylated guar (HMHPG).

4. A method as claimed in one of the preceding claims, in which the molecular mass of said hydrophobically modified galactomannan is less than 2000000 dalton and preferably within the range of between 50000 and 1600000 dalton.

5. A method as claimed in one of the preceding claims, **characterised in that** R has between 18 and 28 carbon atoms.

6. A method as claimed in one of claims 1 to 5, in which said clinker also contains at least one polymer selected from the group comprising xanthane, scleroglucan, wellane, hydroxy ethylated cellulose (HEC), CMC, guar gum and the polyacrylamides.

7. A clinker cement designed to be cemented in a well bored through at least one geological formation of a certain permeability, **characterised in that** it contains a given quantity of at least one derivative of hydrophilically and hydrophobically modified galactomannan, said derivative of hydrophilically modified galactomannan being substituted, on the oxygens, with radicals of the general formula (1): 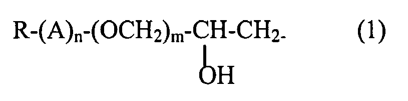 where
A = a linear or branched oxyalkylenic O-CₚH₂ₚ group where p is 2 to 4,
n = 0 to 30 ; m = 0 or 1 where m may not be zero unless n is zero,
R = a linear or branched (hydrophobic) alkyl radical, which may or may not be ethylenically saturated having between 10 and 32 carbon atoms, preferably between 12 and 30
and the number of hydrophobic units varying from 0,00001 to approximately 0,001 substituents per unit of anhydroglucoside.

8. A clinker cement as claimed in claim 7, in which the number of hydrophobic units varying from 0,0001 to approximately 0,001 substituents per unit of anhydroglucoside.

9. A clinker as claimed in claim 7 or 8, **characterised in that** its filtrate is controlled by the addition of said given quantity of derivative of hydrophilically and hydrophobically modified galactomannan.

10. A clinker as claimed in one of claims 7 to 9, **characterised in that** said derivative of guar gum is hydrophobically modified hydroxy propylated guar (HMHPG).

11. A clinker as claimed in one of claims 7 to 10, **characterised in that** its viscosity is mainly controlled by the addition of at least one polymer selected from the group comprising xanthane, scleroglucan, wellane, hydroxy ethylated cellulose (HEC), CMC, guar gum and the polyacrylamides.

## Patentansprüche

1. Verfahren, welches in einem Bohrloch, das sich durch mindestens eine geologische Formation mit einer gewissen Durchlässigkeit erstreckt, zur Anwendung kommt und bei welchem eine Zementmilch in das Bohrloch gegeben wird, **dadurch gekennzeichnet, dass** beim Einleiten der Zementmilch das Durchsickern durch die Wand des Lochs beschränkt wird, indem eine bestimmte Menge mindestens eines Galactomannanderivats, welches hydrophil und hydrophob modifiziert ist, zugesetzt wird, wobei das hydrophil modifizierte Galactomannanderivat an den Sauerstoffatomen mit Gruppen nach der folgenden allgemeinen Formel (1) substituiert ist:
R-(A)ₙ-(OCH₂)ₘ-CHOH-CH₂ (1)
wobei folgendes gilt:
A = geradkettige oder verzweigte Oxyalkylengruppe O-CₚH₂ₚ, wobei p = 2 bis 4 ist,
n = 0 bis 30; m = 0 oder 1, wobei m nur dann gleich null sein kann, wenn n = 0 ist,
R = geradkettige oder verzweigte (hydrophobe) Alkylgruppe, welche gesättigt oder durch das Vorhandensein von Doppelbindungen ungesättigt ist und zwischen 10 und 32, vorzugsweise zwischen 12 und 30, Kohlenstoffatome aufweist, wobei die hydrophobe Gruppe bezogen auf eine anhydroglucosidische Einheit mit einem Substitutionsgrad von 0,00001 bis 0,001 zugegen ist.

2. Verfahren gemäß Anspruch 1, wobei die hydrophobe Gruppe bezogen auf eine anhydroglucosidische Einheit mit einem Substitutionsgrad von 0,0001 bis 0,001 zugegen ist.

3. Verfahren gemäß den Ansprüchen 1 oder 2, wobei es sich bei dem Derivat um hydrophob modifiziertes Hydroxypropylguar (HMHPG) handelt.

4. Verfahren gemäß einem der vorhergehenden Ansprüche, wobei das Molekulargewicht des hydrophob modifizierten Galactomannanderivats geringer als 2.000.000 Dalton ist und vorzugsweise zwischen 50.000 und 1.600.000 Dalton liegt.

5. Verfahren gemäß einem der vorhergehenden Ansprüche, **dadurch gekennzeichnet, dass** R zwischen 18 und 28 Kohlenstoffatome aufweist.

6. Verfahren nach einem der Ansprüche 1 bis 5, wobei die Zementmilch darüber hinaus mindestens ein Polymer enthält, welches aus der Gruppe gewählt ist, die aus Xanthan, Scleroglucan, Gellan (le wellane), Hydroxyethylcellulose (HEC), CMC, Guargummi und den Polyacrylamiden besteht.

7. Zementmilch, welche für den Einsatz in einem Bohrloch, das sich durch mindestens eine geologische Formation mit einer gewissen Durchlässigkeit erstreckt, bestimmt ist, **dadurch gekennzeichnet, dass** sie eine bestimmte Menge mindestens eines hydrophil und hydrophob modifizierten Galactomannanderivats aufweist, wobei das hydrophil modifizierte Galactomannanderivat an den Sauerstoffatomen mit Gruppen nach der folgenden allgemeinen Formel (1) substituiert ist:
R-(A)ₙ-(OCH₂)ₘ-CHOH-CH₂ (1)
wobei folgendes gilt:
A = geradkettige oder verzweigte Oxyalkylengruppe O-CₚH₂ₚ, wobei p = 2 bis 4 ist,
n = 0 bis 30; m = 0 oder 1, wobei m nur dann gleich null sein kann, wenn n = 0 ist,
R = geradkettige oder verzweigte (hydrophobe) Alkylgruppe, welche gesättigt oder durch das Vorhandensein von Doppelbindungen ungesättigt ist und zwischen 10 und 32, vorzugsweise zwischen 12 und 30, Kohlenstoffatome aufweist, wobei die hydrophobe Gruppe bezogen auf eine anhydroglucosidische Einheit mit einem Substitutionsgrad von 0,00001 bis 0,001 zugegen ist.

8. Zementmilch gemäß Anspruch 7, wobei die hydrophobe Gruppe bezogen auf eine anhydroglucosidische Einheit mit einem Substitutionsgrad von 0,0001 bis 0,001 zugegen ist.

9. Zementmilch gemäß den Ansprüchen 7 oder 8, **dadurch gekennzeichnet, dass** ihr Filtrat durch den Zusatz der bestimmten Menge an hydrophil und hydrophob modifiziertem Galactomannanderivat kontrolliert ist.

10. Zementmilch gemäß einem der Ansprüche 7 bis 9, **dadurch gekennzeichnet, dass** es sich bei dem Guargummiderivat um hydrophob modifiziertes Hydroxypropylguar (HMHPG) handelt.

11. Zementmilch gemäß einem der Ansprüche 7 bis 10, **dadurch gekennzeichnet, dass** ihre Viskosität hauptsächlich durch den Zusatz mindestens eines Polymers kontrolliert ist, welches aus der Gruppe gewählt ist, die aus Xanthan, Scleroglucan, Gellan (le wellane), Hydroxyethylcellulose (HEC), CMC, Guargummi und den Polyacrylamiden besteht.
